# EUROPÄISCHE PATENTSCHRIFT

(11) **EP 1 033 031 B1**
(45) Veröffentlichungstag und Bekanntmachung des Hinweises auf die Patenterteilung: **13.02.2002**
(21) Anmeldenummer: 98961217.1
(22) Anmeldetag: 17.11.1998
(51) Int. Cl.: H04N 1/60, H04N 1/32

(54) **VORRICHTUNG UND VERFAHREN ZUM BESTIMMEN VON BILDVERÄNDERUNGSWERTEN**
DEVICE AND METHOD FOR DETERMINING IMAGE MODIFICATION VALUES
DISPOSITIF ET PROCEDE POUR DETERMINER DES VALEURS DE MODIFICATIONS D'IMAGE

(30) Priorität: 20.11.1997 DE 19751465
(43) Veröffentlichungstag der Anmeldung: 06.09.2000
(73) Patentinhaber: Agfa-Gevaert AG, 51373 Leverkusen (DE)
(72) Erfinder: KEUPP, Wolfgang, D-81549 München (DE); FINDEIS, Günter, D-82054 Sauerlach (DE); FÜRSICH, Manfred, D-82024 Taufkirchen (DE)
(86) Internationale Anmeldenummer: EP9807385
(87) Internationale Veröffentlichungsnummer: WO9927706

(56) Entgegenhaltungen:
- EP-A- 0 473 516
- DE-A- 3 409 771
- US-A- 4 622 582
- US-A- 5 613 004
- PATENT ABSTRACTS OF JAPAN vol. 097, no. 003, 31. März 1997 & JP 08 293023 A (FUJI PHOTO FILM CO LTD), 5. November 1996 & US 5 717 839 A (ICHIKAWA) 10. Februar 1998

## Beschreibung

Die vorliegende Erfindung betrifft eine Vorrichtung und ein Verfahren zum Bestimmen von Bildveränderungswerten für ein Kopieren eines mit einer digitalen Kamera aufgenommenen Bildes und eine Vorrichtung zum Kopieren eines Bildes auf Kopiermaterial.

Es ist eine Vielzahl von digitalen Kameras bekannt und im Handel erhältlich, die aus unterschiedlichen Komponenten aufgebaut sind. Die verschiedenen digitalen Kameras beinhalten insbesondere unterschiedliche Bildaufnahmesensoren, die Licht in elektronische Signale wandeln. Diese Bildaufnahmesensoren weisen unterschiedliche Charakteristiken auf. Insbesondere besitzen sie eine unterschiedliche spektrale Sensibilisierung. Dementsprechend sind die Farb- und Dichtedarstellungen der von den verschiedenen digitalen Kameras aufgenommenen Bilder unterschiedlich.

Die von den digitalen Kameras aufgenommenen Bilder werden von den Bildaufnahmesensoren in digitale Bilddaten gewandelt, die auf einem Speichermittel abgelegt werden. Ein solches Speichermittel kann beispielsweise eine Chipkarte sein. Als Bildaufnahmesensoren werden in den digitalen Kameras sogenannte CCD(Charge Coupled Device)-Bildsensoren verwendet.

Es ist beabsichtigt, die von der digitalen Kamera erzeugten Bilddaten, die die aufgenommenen Bilder repräsentieren, einer Vorrichtung zur Erzeugung von Kopien von diesen aufgenommenen Bildern zuzuleiten. Eine solche Vorrichtung zur Erzeugung von Kopien kann beispielsweise ein sogenannter Fotoprinter, ein sogenanntes Minilab oder ein Drucker sein, der von einem Computer angesteuert wird. Die Vorrichtung zum Kopieren erzeugt von den aufgenommenen Bildern Kopien auf Fotopapier bzw. Druckerpapier oder anderen Kopiermaterialien. Der Begriff Kopieren ist daher in diesem Sinne als allgemeiner Begriff für ein Reproduzieren der aufgenommenen Bilder auf irgendeinem Kopiermaterial zu betrachten.

Aufgrund der unterschiedlichen Charakteristiken der in den diversen digitalen Kameras verwendeten Komponenten, insbesondere der Bildaufnahmesensoren, kann es bei der Wiedergabe der aufgenommenen Bilder beim Kopieren auf Fotopapier oder andere Kopiermaterialien zu unerwünschten Farb- und Dichteverzerrungen kommen. Ein von unterschiedlichen digitalen Kameras aufgenommenes Objekt kann daher auf den Kopien auf unterschiedliche Weise dargestellt sein.

PATENT ABSTRACTS OF JAPAN vol. 097, no. 003, veröffentlicht am 31. März 1997 & JP-A-08 293023 (FUJI PHOTO FILM CO LTD), veröffentlicht am 5. November 1996 beziehungsweise dessen US Anmeldung US-A-5 717 839 veröffentlicht am 10. Februar 1998 offenbaren eine Vorrichtung zum Bestimmen von Bildveränderungswerten für ein Kopieren eines mit einer digitalen Kamera aufgenommenen Bildes auf Kopiermaterial mit
- einem Erkennungsmittel zum Erkennen des Typs der digitalen Kamera, die das zu kopierende Bild aufgenommen hat, wobei der Bild-Prozessor den Typ des Eingangsbildes identifiziert auf der Basis der erhaltenen Bildinformation und daß durch Kommunikation mit dem Drucker dessen Typ identifiziert wird und
- einem Steuermittel zur Bestimmung der Bildveränderungswerte in Abhängigkeit von dem erkannten Typ der digitalen Kamera, wobei Korrekturtabellen-Daten übertragen entsprechend der Kombination aus Eingabevorrichtung und Drucker.
Der Typ der Kamera wird als Präambel den Bilddaten vorangestellt werden, wodurch der Eingabebilddatei eine explizite Information über das Bildeingabemittel zugeordnet wird.

Aufgabe der vorliegenden Erfindung ist es daher, eine exakte und naturgetreue Wiedergabe von mit einer digitalen Kamera aufgenommenen Bildern auf Kopiermaterialien zu ermöglichen.

Diese Aufgabe wird erfindungsgemäß durch die technische Lehre der Ansprüche 1 und 6 gelöst.

Erfindungsgemäß kann der Kameratyp erkannt werden, mit dem ein zu kopierendes Bild aufgenommen wurde. Der Begriff Kameratyp bezieht sich hier auf die technische Ausführung und die physikalische Zusammensetzung der jeweiligen digitalen Kamera. Die Bezeichnung, unter der die jeweilige Kamera im Handel erhältlich ist, ist von dem Begriff Kameratyp, wie er hier zu verstehen ist, unabhängig. Es ist nämlich möglich, daß ein Hersteller einer digitalen Kamera Änderungen an der physikalischen Zusammensetzung vornimmt, ohne allerdings deren handelsübliche Bezeichnung gleichfalls ändern zu wollen. Andererseits könnte es vorkommen, daß digitale Kameras gleicher technischer Ausführung und physikalischer Zusammensetzung unter verschiedenen Bezeichnungen im Handel erhältlich sind.

Mittels der Bestimmung der Bildveränderungswerte in Abhängigkeit von dem erkannten Typ der digitalen Kamera ist es möglich, die individuelle Empfindlichkeit des Typs der digitalen Kamera in Farbe und/oder Dichte beim Kopieren der Bilder zu berücksichtigen. Die Bildveränderungswerte können beispielsweise charakteristische Vorgaben für eine Farb- und/oder Dichteeinstellung, für die Gradation und/oder die Bildmanipulation sein, wie sie beispielsweise mit einer Farbtransformationstabelle, einer sogenannten 3D-Lookup-Tabelle, in einer Belichtungsstation, die das eigentliche Kopieren des aufgenommenen Bildes auf Kopiermaterial durchführt, vorgenommen wird.

Einfachheitshalber kann der erfindungsgemäßen Vorrichtung eine Information mit der Angabe des Typs der digitalen Kamera übermittelt werden, die das zu entwickelnde Bild aufgenommen hat. Diese Information wird von der erfindungsgemäßen Vorrichtung erfaßt. Mittels der Information kann die erfindungsgemäße Vorrichtung direkt auf einen entsprechenden Kopierdatensatz zugreifen. Bei dieser Ausgestaltung des Erkennungsmittels ist es allerdings vorteilhaft, wenn die Information mit der Angabe des Typs der digitalen Kamera eindeutig spezifiziert und somit eindeutig vorgegeben ist.

Das Erkennungsmittel kann auch so ausgestaltet sein, daß es Bilddaten wenigstens eines zu kopierenden Bildes auswertet. Die Auswertung des kann dabei auf das Erkennen der Auflösung oder der Farbentiefe des aufgenommenen Bildes oder die Formatierungs- oder Komprimierungsart des Datensatzes beschränkt sein. Eine vollständige Auswertung der Bilddaten, wie sie für die eigenständige Erzeugung von Bildveränderungswerten notwendig wäre, ist in diesem Fall nicht erforderlich. Der Typ der digitalen Kamera kann auf diese Weise vorteilhafterweise auch ohne vorgegebene Spezifikation schnell und eindeutig identifiziert werden.

In einer weiteren, besonders vorteilhaften Ausgestaltung der Erfindung sind in einem Speicher mehrere Kopierdatensätze abgespeichert, die die Bildveränderungswerte für das Kopieren der Bilder enthalten. Den Kopierdatensätzen sind vorgegebene Typen von digitalen Kameras zugeordnet. Die erfindungsgemäße Vorrichtung ist in der Lage, aus den Daten, die ihr übermittelt werden, den Typ der digitalen Kamera zu erkennen, die das Bild aufgenommen hat. In Abhängigkeit von dem erkannten Kameratyp kann somit der diesem zugeordnete Kopierdatensatz ausgewählt werden.

In einer weiteren vorteilhaften Ausgestaltung der erfindungsgemäßen Vorrichtung ist die Information mit der Angabe des Typs der digitalen Kamera mittels einer steganografischen Methode in anderen erfaßten Daten versteckt und kann durch das Erkennungsmittel ebenfalls mittels einer solchen steganografischen Methode erkannt werden. Dadurch ist es vorteilhafterweise möglich, bestehende Formate für die Übermittlung, Abspeicherung und Verarbeitung der Bilddaten beibehalten zu können.

Die erfindungsgemäße Vorrichtung zum Bestimmen von Biidveränderungswerten kann insbesondere direkt in einer Vorrichtung zum Kopieren des Bildes auf Kopiermaterial integriert sein. Es ist aber ebenso möglich, sie getrennt von der eigentlichen Kopiervorrichtung, die aufgrund der Daten, die ihr übermittelt werden, das Bild auf dem Kopiermaterial erzeugt, auszugestalten. Dies wäre beispielsweise dann der Fall, wenn die Bestimmung der Bildveränderungswerte in einem Computer, der auf entsprechende Programme zugreift, vorgenommen wird und ein an diesen Computer angeschlossener Drucker aufgrund der von dem Computer übermittelten Daten die Kopie des Bildes erzeugt.

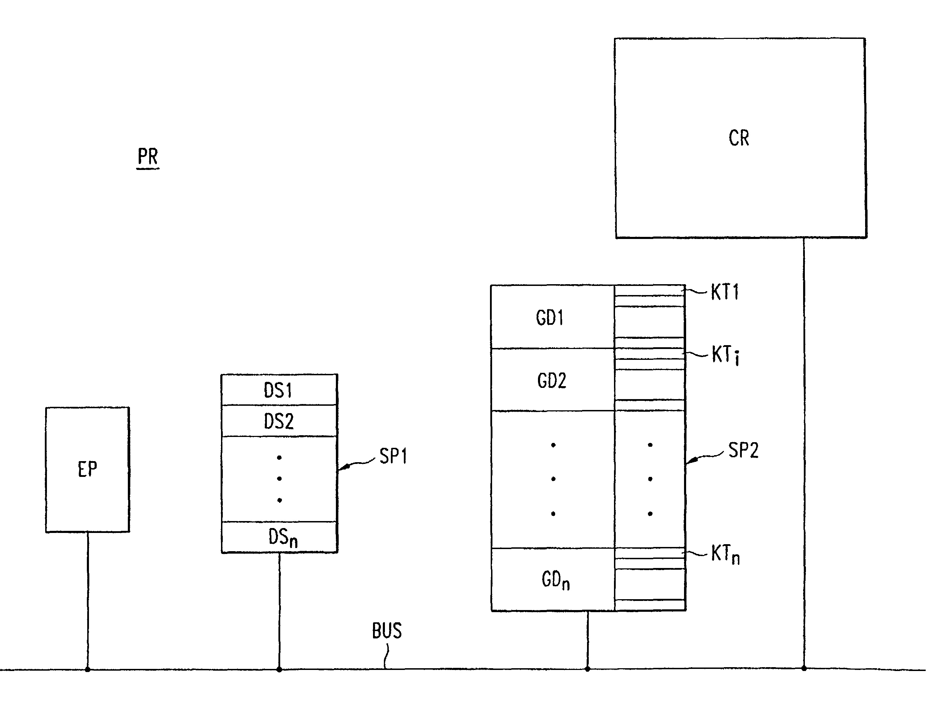

Im folgenden werden die Erfindung und ihre Vorteile anhand eines Ausführungsbeispiels und der Zeichnung beschrieben.

Die Figur zeigt ein Ausführungsbeispiel einer erfindungsgemäßen Vorrichtung zum Bestimmen von Bildveränderungswerten für ein Kopieren eines mit einer digitalen Kamera aufgenommenen Bildes.

Die Figur zeigt das Ausführungsbeispiel einer Vorrichtung zum Kopieren von Bildern auf Kopiermaterial, die hier ein sogenannter Fotoprinter PR ist und die eine erfindungsgemäße Vorrichtung zum Bestimmen von Bildveränderungswerten für ein Kopieren eines mit einer digitalen Kamera aufgenommenen Bildes enthält. Die Figur zeigt einen Teil des Printers PR, der ein Steuermittel CR für die Steuerung der von dem Printer PR ausführbaren Funktionen aufweist. In einem ersten Speicher SP1 ist eine Vielzahl von Datensätzen DS1 bis DSn abgespeichert. Diese Datensätze DS1 bis DSn beinhalten Bilddaten, die von einer digitalen Kamera beim Aufnehmen von Bildern erzeugt wurden. Jeder der Datensätze DS1 bis DSn beinhaltet die Bilddaten eines der aufgenommenen Bilder.

Der Printer PR weist ein Empfangsmittel EP auf, mit dem beliebige Daten und/oder Signale empfangen werden können. Über dieses Empfangsmittel EP werden beispielsweise die in den Datensätzen DS1 bis DSn abgespeicherten Bilddaten empfangen. Das Empfangsmittel EP ist als Lesemittel für Speicher, wie z.B. Chipkarten, ausgestaltet.

Der Printer PR weist einen zweiten Speicher SP2 auf, in dem verschiedene Kopierdatensätze GD1 bis GDn abgespeichert sind. In diesen Kopierdatensätzen GD1 bis GDn sind Bildveränderungswerte für das Kopieren der Bilder auf Fotopapier abgelegt. Diese Bildveränderungswerte enthalten insbesondere Angaben für die Farb- und/oder Dichteeinstellung, die für das Kopieren der Bilder auf Fotopapier verwendet werden. Die Kopierdatensätze GD1 bis GDn sind verschiedenen Kameratypen KT1 bis KTn zugeordnet. Der Begriff Kameratyp bezieht sich hier auf die technische Ausführung und die physikalische Zusammensetzung der jeweiligen digitalen Kamera. Im vorliegenden Ausführungsbeispiel ist beispielsweise dem Kopierdatensatz GD1 der Kameratyp KT1, dem Kopierdatensatz GD2 der Kameratyp KTi und dem Kopierdatensatz GDn der Kameratyp KTn zugeordnet.

Die in den verschiedenen Kopierdatensätzen GD1 bis GDn enthaltenen Bildveränderungswerte sind speziell an die ihnen zugeordneten Kameratypen angepaßt. Mit den Bildveränderungswerten werden bereits bekannte Charakteristiken der verschiedenen Kameratypen berücksichtigt. Diese Charakteristiken werden vor dem Betrieb des Printers PR durch einen Eichvorgang ermittelt, in dem mehrere digitale Kameras des gleichen Typs Messungen unterzogen werden, um so die besonderen physikalischen und elektronischen Eigenschaften dieses Kameratyps festzustellen. Die Charakteristiken der Kameratypen können beispielsweise zu Farb- und/oder Dichteverzerrungen des aufgenommenen Bildes erzeugen, so daß bei dem Kopieren auf Kopiermaterial z. B, ein farbstichiges oder farbgesättigtes Bild erzeugt würde. Mit den so festgestellten spezifischen, physikalischen und elektronischen Eigenschaften dieses Kameratyps können die für diesen Kameratyp benötigten Bildveränderungswerte ermittelt werden, die dann wiederum in einem Kopierdatensatz zusammengefaßt werden. Die Kopierdatensätze GD1 bis GDn werden vorteilhafterweise für das Kopieren der Bilder fest vorgegeben und während des Betriebs der erfindungsgemäßen Vorrichtung nicht verändert.

Über das Empfangsmittel EP kann eine explizite Information mit der Angabe des Typs der digitalen Kamera, mit der das zu kopierendes Bild aufgenommen wurde, empfangen werden. Diese Information mit der Angabe des Kameratyps ist vorteilhafterweise eindeutig spezifiziert, so daß eine eindeutige Zuordnung zu den abgespeicherten Kopierdatensätzen GD1 bis GDn möglich ist. Die Information mit der Angabe des Kameratyps kann bereits in dem Datensatz DS1 bis DSn mit den Bilddaten des zu kopierenden Bildes enthalten sein. Die Information mit der Angabe des Kameratyps kann durch das Steuermittel CR ermittelt und der in dem zweiten Speicher SP2 abgespeicherte zugeordnete Kopierdatensatz ausgewählt werden. Die in dem ausgewählten Kopierdatensatz enthaltenen Bildveränderungswerte werden daraufhin von der Belichtungsstation für die Erzeugung der Kopien verwendet.

Die Information mit der Angabe des Typs der digitalen Kamera ist hier mittels einer steganografischen Methode in den anderen erfaßten Bilddaten, die in den Datensätzen DS1 bis DSn enthalten sind, versteckt und kann durch das Steuermittel CR mittels einer solchen steganografischen Methode erkannt werden. Steganografische Methoden sind beispielsweise aus dem Aufsatz "Hinters Licht geführt" von J. Rink in der Zeitschrift c't, 1997, Heft 6, Seiten 330-336, bekannt.

Wird dem Printer PR eine solche explizite Information mit der Angabe des Kameratyps nicht übermittelt, so ist es weiterhin möglich, einen der in dem ersten Speicher SP1 abgespeicherten Datensätze DS1 bis DSn auszuwerten, um mittels der in diesem Datensatz abgespeicherten Bilddaten den Kameratyp, der das zugehörige Bild aufgenommen hat, zu erkennen. Jede digitale Kamera hat bestimmte Charakteristiken betreffend beispielsweise die Auflösung oder die Farbtiefe der mit ihr aufgenommenen Bilder. Darüber hinaus hat sie eine besondere Art der Formatierung und Komprimierung der von ihr erzeugten Bilddaten. Für die Bestimmung des Kameratyps ist es daher ausreichend, beispielsweise das Format der Bilddaten des zu kopierenden Bildes auszuwerten. Der eigentliche Inhalt des zu kopierenden Bildes muß dabei nicht ausgewertet werden. Um die Sicherheit für die exakte Bestimmung des Kameratyps zu erhöhen, ist es ebenfalls möglich, mehrere Datensätze hinsichtlich ihres Formats oder einer anderen bestimmten Charakteristik auszuwerten.

Für die Übertragung von Daten innerhalb der erfindungsgemäßen Vorrichtung PR weist diese einen Bus BUS auf, an den ihre Komponenten über bidirektionale Datenübertragungsleitungen angeschlossen sind.

Die bestimmten Bildveränderungswerte, die für die digitale Kamera spezifisch und in dem ausgewählten Kopierdatensatz zusammengefaßt sind, werden anschließend von dem Steuermittel CR dafür verwendet, bildspezifische Farbkopierwerte für das Kopieren des jeweiligen Bildes auf Kopiermaterial zu bestimmen. Die einzelnen Farbkopierwerte werden daraufhin zu der nicht dargestellten Belichtungsstation übermittelt, die auf deren Grundlage eine Kopie des aufgenommenen Bildes auf Fotopapier erzeugt. Die Bestimmung der einzelnen Farbkopierwerte für jedes zu kopierende Bild ist nicht erfindungswesentlich und kann beispielsweise mit einem Verfahren erfolgen, wie es in der deutschen Patentschrift DE-PS 28 40 287 zum Bestimmen von Farbkopierwerten für ein Kopieren von fotografischen Filmvorlagen auf Fotopapier offenbart ist.

## Patentansprüche

1. Vorrichtung zum Bestimmen von Bildveränderungswerten für ein Kopieren eines mit einer digitalen Kamera aufgenommenen Bildes auf Kopiermaterial mit
- einem Erkennungsmittel (EP, CR) zum Erkennen des Typs (KT1, KTn) der digitalen Kamera, die das zu kopierende Bild aufgenommen hat, und
- einem Steuermittel (CR) zur Bestimmung der Bildveränderungswerte in Abhängigkeit von dem erkannten Typ (KT1, ..., KTn) der digitalen Kamera,
**dadurch gekennzeichnet, daß**
das Erkennungsmittel (EP, CR) so ausgestaltet ist, daß Bilddaten wenigstens eines zu kopierenden Bildes auswertbar sind.

2. Vorrichtung nach Anspruch 1, **dadurch gekennzeichnet, daß** das Erkennungsmittel (EP, CR) so ausgestaltet ist, daß eine Information mit der Angabe des Typs (KT1, ... , KTn) der digitalen Kamera erfaßbar ist.

3. Vorrichtung nach einem der Ansprüche 1-2, **dadurch gekennzeichnet, daß**
- sie einen Speicher (SP2) zum Speichern von mehreren Kopierdatensätzen (GD1, ..., GDn) aufweist, die unterschiedliche Bildveränderungswerte für das Kopieren der Bilder enthalten und denen verschiedene Typen (KT1, ... , KTn) von digitalen Kameras zugeordnet sind, und
- das Steuermittel (CR) so ausgestaltet ist, daß mittels der Zuordnung der Typen (KT1, ... , KTn) von digitalen Kameras zu den Kopierdatensätzen (GD1, ... , GDn) der dem erkannten Typ (KT1, ... , KTn) der digitalen Kamera zugeordnete Kopierdatensatz auswählbar und dessen Bildveränderungswerte bestimmbar sind.

4. Vorrichtung nach Anspruch 2, **dadurch gekennzeichnet, daß** die Information mit der Angabe des Typs (KT1, ... , KTn) der digitalen Kamera in anderen erfaßten Daten mittels einer steganografischen Methode versteckt ist und das Erkennungsmittel (EP, CR) die Information in den anderen erfaß-ten Daten mittels einer steganografischen Methode erkennen kann.

5. Vorrichtung zum Kopieren eines Bildes auf Kopiermaterial, die eine Vorrichtung nach einem der Ansprüche 1-4 aufweist.

6. Verfahren zum Bestimmen von Bildveränderungswerten für ein Kopieren eines mit einer digitalen Kamera aufgenommenen Bildes auf Kopiermaterial mit den folgenden Schritten:
- Erkennen des Typs (KT1, ... , KTn) der digitalen Kamera, die das zu kopierende Bild aufgenommen hat, und
- Bestimmen der Bildveränderungswerte in Abhängigkeit von dem erkannten Typ (KT1, ..., KTn) der digitalen Kamera,
**dadurch gekennzeichnet, daß**
das Erkennen des Typs (KT1, ... , KTn) der digitalen Kamera mittels eines Auswertens der Bilddaten wenigstens eines zu kopierenden Bildes erfolgt.

## Claims

1. A device for determining image-modification values for copying an image recorded by a digital camera onto copying material with
- an identification means (EP, CR) for identifying the type (KT1, ..., KTn) of the digital camera that has recorded the image to be copied, and
- a control means (CR) for determining the image-modification values as a function of the identified type (KT1, ..., KTn) of the digital camera,
**characterised in that**
the identification means (EP, CR) is configured in such a way that image data pertaining to at least one image to be copied are capable of being evaluated.

2. Device according to claim 1, **characterised in that** the identification means (EP, CR) is configured in such a way that information comprising the indication of the type (KT1, ..., KTn) of the digital camera is capable of being captured.

3. Device according to one of claims 1-2, **characterised in that**
- it comprises a memory (SP2) for storing several copy-data records (GD1, ..., GDn) which contain varying image-modification values for the copying of the images and to which various types (KT1, ..., KTn) of digital cameras are assigned, and
- the control means (CR) is configured in such a way that by means of the assignment of the types (KT1, ..., KTn) of digital cameras to the copy-data records (GD1, ..., GDn) the copy-data record assigned to the identified type (KT1, ..., KTn) of the digital camera is capable of being selected and the image-modification values thereof are capable of being determined.

4. Device according to claim 2, **characterised in that** the information comprising the indication of the type (KT1, ..., KTn) of the digital camera is hidden in other captured data by means of a steganographic method and the identification means (EP, CR) is able to identify the information in the other captured data by means of a steganographic method.

5. A device for copying an image onto copying material, said device comprising a device according to one of claims 1-4.

6. A process for determining image-modification values for copying an image recorded by a digital camera onto copying material, involving the following steps:
- identifying the type (KT1, ..., KTn) of the digital camera that has recorded the image to be copied, and
- determining the image-modification values as a function of the identified type (KT1, ..., KTn) of the digital camera,
**characterised in that**
identification of the type (KT1, ..., KTn) of the digital camera is effected by means of an evaluation of the image data pertaining to at least one image to be copied.

## Revendications

1. Dispositif pour déterminer des valeurs de modification d'image pour une copie d'une image enregistrée avec une caméra numérique sur un matériau de copie, comportant
- un moyen de détection (EP, CR) pour détecter le type (KT1 à KTn) de la caméra numérique qui a enregistré l'image à copier, et
- un moyen de commande (CR) pour déterminer les valeurs de modification d'image en fonction du type détecté (KT1 à KTn) de la caméra numérique,
**caractérisé en ce que**
le moyen de détection (EP, CR) est conçu de telle sorte que des données d'image d'au moins une image à copier peuvent être évaluées.

2. Dispositif selon la revendication 1, **caractérisé en ce que** le moyen de détection (EP, CR) est conçu de telle sorte qu'une information avec l'indication du type (KT1 à KTn) de la caméra numérique peut être acquise.

3. Dispositif selon l'une des revendications 1 ou 2,
**caractérisé en ce que**
- il comporte une mémoire (SP2) pour mémoriser plusieurs ensembles de données de copie (GD1 à GDn) qui contiennent différentes valeurs de modification d'image pour la copie des images et auxquels différents types (KT1 à KTn) de caméras numériques sont associés et
- le moyen de commande (CR) est conçu de telle sorte que, au moyen de l'association des types (KT1 à KTn) de caméras numériques aux ensembles de données de copie (GD1 à GDn), l'ensemble de données de copie associé au type détecté (KT1 à KTn) de la caméra numérique peut être sélectionné et ses valeurs de modification d'image peuvent être déterminées.

4. Dispositif selon la revendication 2, **caractérisé en ce que** l'information avec l'indication du type (KT1 à KTn) de la caméra numérique est cachée au moyen d'une méthode stéganographique dans d'autres données acquises et **en ce que** le moyen de détection (EP, CR) peut détecter l'information dans les autres données acquises au moyen d'une méthode stéganographique.

5. Dispositif pour copier une image sur un matériau de copie, comportant un dispositif selon l'une des revendications 1 à 4.

6. Procédé pour déterminer des valeurs de modification d'image pour une copie d'une image enregistrée avec une caméra numérique sur un matériau de copie, comportant les étapes suivantes :
- détection du type (KT1 à KTn) de la caméra numérique qui a enregistré l'image à copier et
- détermination des valeurs de modification d'image en fonction du type détecté (KT1 à KTn) de la caméra numérique,
**caractérisé en ce que**
la détection du type (KT1 à KTn) de la caméra numérique s'effectue au moyen d'une évaluation des données d'image d'au moins une image à copier.
